(19) Europäisches Patentamt / European Patent Office / Office européen des brevets

(11) **EP 3 681 015 A1**

(12) **EUROPEAN PATENT APPLICATION**
published in accordance with Art. 153(4) EPC

(43) Date of publication:
**15.07.2020   Bulletin 2020/29**

(21) Application number: **18855047.9**

(22) Date of filing: **14.08.2018**

(51) Int Cl.:
*H02K 1/27* *(2006.01)*          *H02K 21/14* *(2006.01)*

(86) International application number:
**PCT/JP2018/030268**

(87) International publication number:
**WO 2019/049613 (14.03.2019 Gazette 2019/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **07.09.2017   JP 2017172263**

(71) Applicant: **Mitsuba Corporation
Kiryu-shi, Gunma 376-8555 (JP)**

(72) Inventors:
• **OHORI, Ryo
  Kiryu-shi
  Gunma 376-8555 (JP)**
• **SHIODA, Naoki
  Kiryu-shi
  Gunma 376-8555 (JP)**

(74) Representative: **Hoffmann Eitle
Patent- und Rechtsanwälte PartmbB
Arabellastraße 30
81925 München (DE)**

(54) **BRUSHLESS MOTOR**

(57)   In a brushless motor 11, the maximum value of the magnetic flux density at a radial center part X or a tip end part Y of teeth 22 under a non-load state is 1T or more. A magnet 33 of a rotor 13 has a skew structure of a skew angle θ. When the number of poles of the magnet 33 is 2P, and the number of slots is T, the skew angle θ is represented by θ (electrical angle) = P × (360°/least common multiple of 2P and T) and is set in a range of θ = 30° to 60°. The surface magnetic flux density distribution of the magnet 33 has a sine wave waveform that contains a harmonic having the same phase as the surface magnetic flux density distribution of the magnet 33 among odd multiple harmonics.

[FIG. 7]

(a)

(b)

**Description**

**Technical Field**

The present invention relates to an electric motor and, more particularly, to a brushless motor having a skew structure.

**Background Art**

In order to improve quietness of a brushless motor, it is necessary to reduce torque ripple or cogging so as to smoothly rotate the motor. Thus, in a brushless motor, a skew structure in which a rotor pole or the like is skewed with respect to the motor axial direction has been widely used as a means for reducing the cogging or torque ripple. In the skew structure, an optimum skew angle can be derived from the least common multiple of the number of magnetic poles and the number of slots.

That is, a value obtained by dividing 360° by the least common multiple of the number of magnetic poles and the number of slots is the optimum skew angle (following expression):

$$\text{Optimum skew angle (electrical angle)} = P \times (360°/\text{least common multiple of 2P and T}),$$

where 2P is the number of magnetic poles, and T is the number of slots.

For example, when the number of magnetic poles is four, and the number of slots is six, the least common multiple is 12. Then, dividing 360° by 12 gives 30°. Thus, when the number of magnetic poles is four, and the number of slots is six, an optimum skew angle is 60° (electrical angle).

**Citation List**

**Patent Document**

Patent Document 1: JP 2005-20930 A
Patent Document 2: JP 2016-100979 A
Patent Document 3: Japanese Patent Application No. 2008-172983

**Disclosure of the Invention**

**Problems to be Solved by the Invention**

However, in a brushless motor, there is a difference in cogging torque depending on location due to a change in magnetic flux distribution along the axial direction of the motor. In general, cogging torque tends to be smaller at the axial center portion and to be larger at the end portion. This tendency becomes prominent as magnetic flux density at the center portion or tip end portion of teeth is increased. Thus, in a motor in which the maximum value of magnetic flux density at the above portion exceeds 1T under a non-energized state, even when the skew angle is set to an optimum angle, cogging torque does not become minimum due to a difference in cogging torque along the axial direction. In this case, by setting the skew to a value equal to or larger than the optimum skew angle, the cogging can be made minimum. However, in such a setting, the skew angle becomes large, so that a reduction in magnetic flux due to the skew becomes significant. As a result, it is unavoidable to increase the motor size in order to ensure a desired output.

**Means for Solving the Problems**

A brushless motor according to the present invention includes: a stator having a stator core having a plurality of teeth formed therein and a winding wound around the teeth and accommodated in slots formed between the adjacent teeth; and a rotor disposed radially inside the stator and having a magnet. The magnet has a skew structure in which a magnetic pole switching position is shifted in a rotational direction of the motor along the axial direction thereof. The maximum value of magnetic flux density at a radial center part of the teeth or a tip end part thereof under a non-load state is 1T or more. Surface magnetic flux density distribution of the magnet has a sine wave waveform that contains odd multiple harmonics.

In the present invention, the rotor magnet has a skew structure, and the surface magnetic flux density distribution of the magnet is a sine wave waveform containing odd multiple harmonics. With this configuration, cogging torque is reduced in a brushless motor in which the maximum value of magnetic flux density at a radial center part of the teeth or a tip end part thereof is 1T or more.

In the brushless motor, a skew angle θ of the magnet is represented by θ (electrical angle) = P × (360°/least common multiple of 2P and T), where 2P is the number of magnetic poles, and T is the number of slots, and the skew angle θ may be set in a range of electrical angle of 30° to 60°. Thus, the skew angle is set to a value smaller than the theoretical optimum skew angle, so that it is possible to suppress a reduction in magnetic flux due to the skew. In this case, the skew angle θ may be set in a range of 40° to 60°, preferably, in a range of 40° to 50°, and more preferably, to around 50°.

Further, the harmonics may include one having the same phase as the surface magnetic flux density distribution of the magnet. Thus, effective magnetic flux substantially equivalent to that in the case of the radial magnetization can be maintained, whereby it is possible to achieve both a reduction in cogging torque and ensuring of effective magnetic flux in good balance.

**Advantages Effects of the Invention**

According to the motor of the present invention, by adopting a skew structure to the rotor magnet of the brushless motor and by making the surface magnetic flux distribution of the magnet have a sine wave waveform containing odd multiple harmonics, it is possible to reduce cogging torque even in a brushless motor in which the maximum value of magnetic flux density at a radial center part of the teeth or a tip end part thereof under a non-load state is 1T or more.

**Brief Description of the Drawings**

FIG. 1 is an explanatory view illustrating the configuration of a motor unit with speed reduction mechanism using a brushless motor which is an embodiment of the present invention.

FIG. 2 is a side view of the brushless motor of FIG. 1 as viewed in the axial direction thereof.

FIG. 3 is an explanatory view illustrating the configuration of the rotor magnet in the brushless motor of FIG. 1.

FIG. 4 is an explanatory view of the surface magnetic flux density distribution of the magnet, which illustrates a sine wave (1st-order fundamental wave) free from distortion, a distorted sine wave containing an odd multiple harmonic having the same phase, and a distorted sine wave containing an odd multiple harmonic having an opposite phase.

FIG. 5(a) is an explanatory view of the harmonic having the same phase, and FIG. 5(b) is an explanatory view of the harmonic having the opposite phase.

FIG. 6 is an explanatory view of the content rate of the harmonics.

FIG. 7(a) is an explanatory view in which the relationship between the skew angle θ and cogging torque is compared between the cases of radial magnetization, distorted sine wave containing an odd multiple harmonic having the same phase, and distorted sine wave containing an odd multiple harmonic having an opposite phase, and FIG. 7(b) is an explanatory view in which the relationship between the effective magnetic flux and cogging torque is compared between the above cases.

FIG. 8 is an explanatory view illustrating a surface magnetic flux density waveform in radial magnetization.

**Best Mode for Carrying Out the Invention**

Hereinafter, an embodiment of the present invention will be described in detail based on the drawings. The object of the embodiment to be described below is to reduce cogging or torque ripple by a skew structure and to suppress a reduction in effective magnetic flux due to the skew, to thereby ensure a motor output.

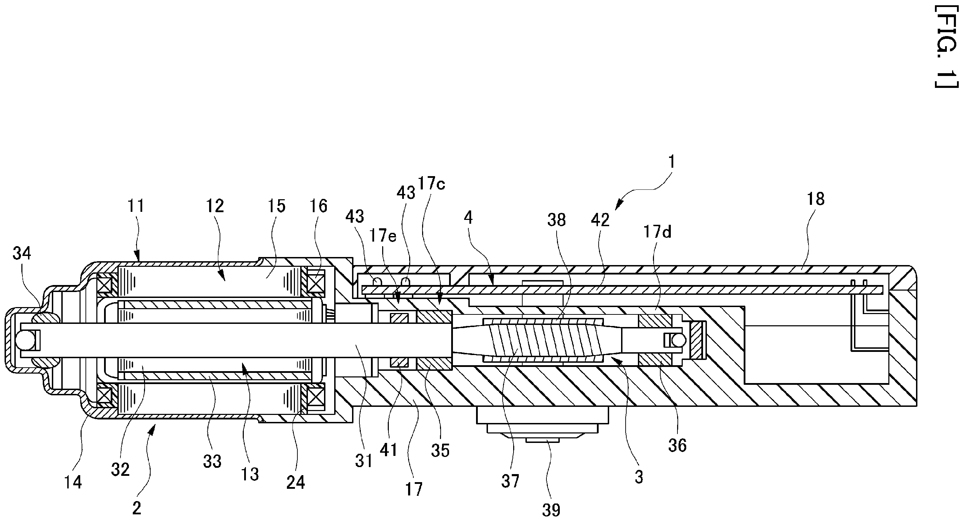

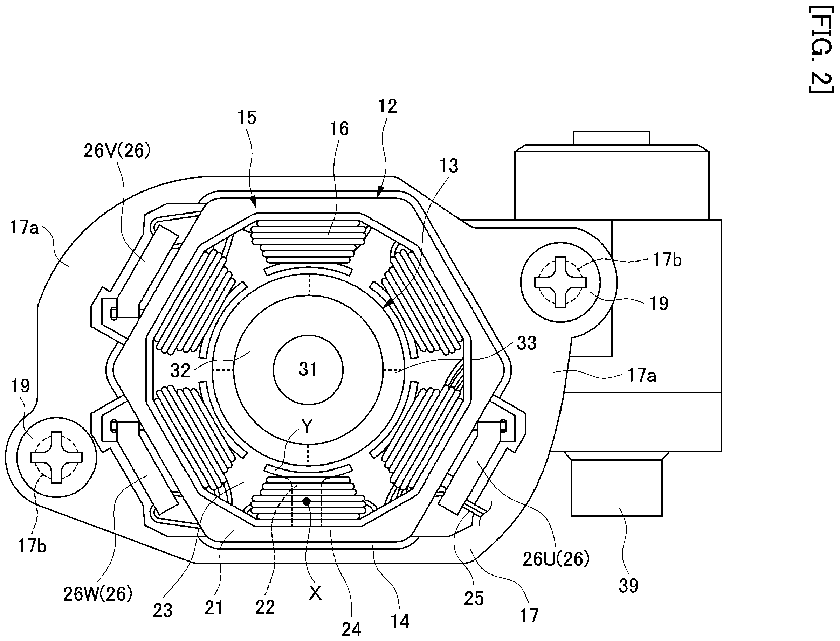

FIG. 1 is an explanatory view illustrating the configuration of a motor unit 1 with speed reduction mechanism using a brushless motor 11 which is an embodiment of the present invention, and FIG. 2 is a side view of the brushless motor 11 as viewed in the axial direction thereof. The motor unit 1 of FIG. 1 is a motor with speed reduction mechanism having a so-called electromechanically integrated structure in which a motor or a speed reduction mechanism (mechanical system) and a controller (electrical system) are integrated with each other. The motor unit 1 includes a motor part 2 having the brushless motor 11, a speed reduction mechanism part 3 using a worm gear, and a control part 4 having mounted thereon a control circuit for controlling drive of the brushless motor 11. The motor unit 1 is used as, e.g., a drive source of a vehicle electric sunroof.

The motor part 2 is provided with the brushless motor 11. The brushless motor 11 is of an inner-rotor type having a stator 12 provided on the outer side and a rotor 13 provided on the inner side. The stator 12 has a motor case 14 serving also as a yoke, a stator core (core member) 15 fixed to the inner peripheral side of the motor case 14, and a coil 16 wound around the stator core 15. The motor case 14 is made of iron or the like and has a bottomed cylindrical shape, the cross section of which is hexagonal. The opening portion of the motor case 14 is attached with a frame 17 made of synthetic resin. The upper portion of the frame 17 is opened, and a cover 18 is attached to the opening portion. A flange part 17a of the frame 17 has formed therein a screw hole 17b for attaching the motor into which a screw 19 is screwed and the motor case 14 is fixed to the flange part 17a with the screw 19.

The stator core 15 has an integrated core structure formed by laminating a large number of steel plates. The stator core 15 has a hexagonal yoke part 21 and teeth 22 protruding inward from the yoke part 21. A plurality of teeth (six in this example) is provided along the circumferential direction, and a slot 23 (six in total) is formed between adjacent teeth 22. In the brushless motor 11, a radial center part X of the teeth 22 or a tip end part Y thereof has a magnetic flux density of up to 1T or more under a non-energized state.

An insulator 24 made of synthetic resin is fitted inside the stator core 15 from both end sides in the axial direction. Each tooth 22 is wound with a winding 25 through the insulator 24 to thereby form a coil 16. The insulator 24 is provided with a coil terminal (coil connection terminal) 26 (26U, 26V, 26W) corresponding to each phase (three phases of U, V, W in this example). The coil 16 (winding 25) is electrically connected to each of the coil terminals 26U, 26V and 26W.

The rotor 13 is disposed inside the stator 12. The rotor 13 has a configuration in which a rotary shaft 31, a rotor core 32 and a magnet 33 are coaxially arranged. More specifically, the rotor core 32 has a cylindrical shape formed by laminating a large number of steel plates and is fitted to the outer periphery of the rotary shaft 31. The magnet 33 having a ring shape is fixed to the outer periphery of the rotor core 32. The magnet 33 is magnetized so as to have a plurality of (four in this example) magnetic poles along the circumferential direction. The magnet 33 is magnetized such that the radial center part X of the teeth 22 or tip end part Y thereof has a magnetic flux density of up to 1T or more under a non-energized state.

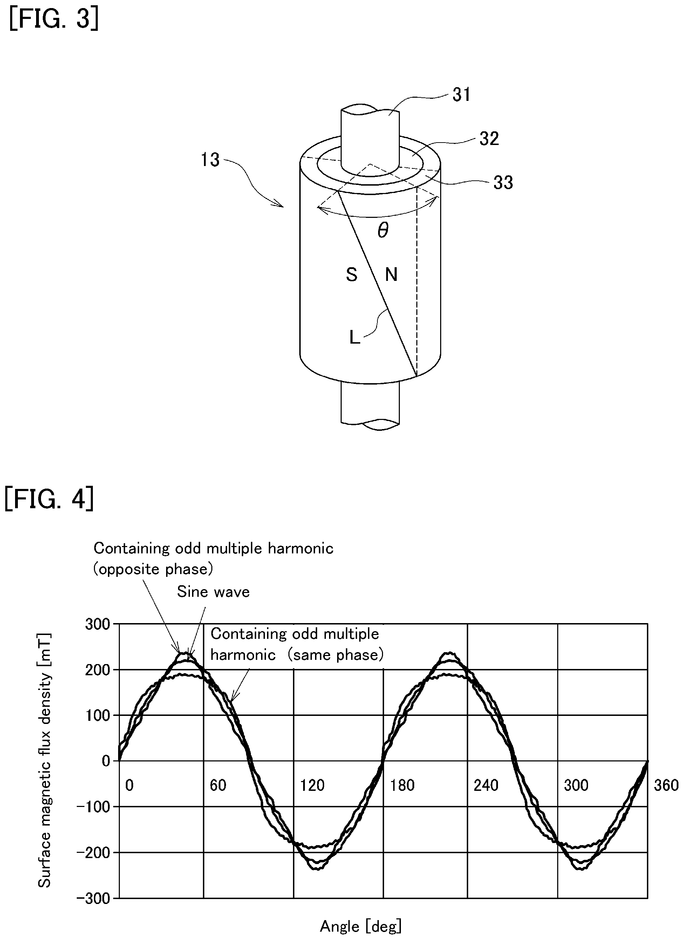

In the brushless motor 11, skew magnetization is applied to the magnet 33. FIG. 3 is an explanatory view illustrating the configuration of the magnet 33. As illustrated in FIG. 3, the magnet 33 has a skew structure, in which a magnetic pole boundary line L is skewed so as to be shifted in the rotational direction along the axial direction. In the present embodiment, a skew angle $\theta$ of the magnet 33 is set to less than the above-mentioned optimum skew angle (electrical angle 60°) or in a range of electrical angle 30° to electrical angle 60° ($30° \leq \theta < 60°$).

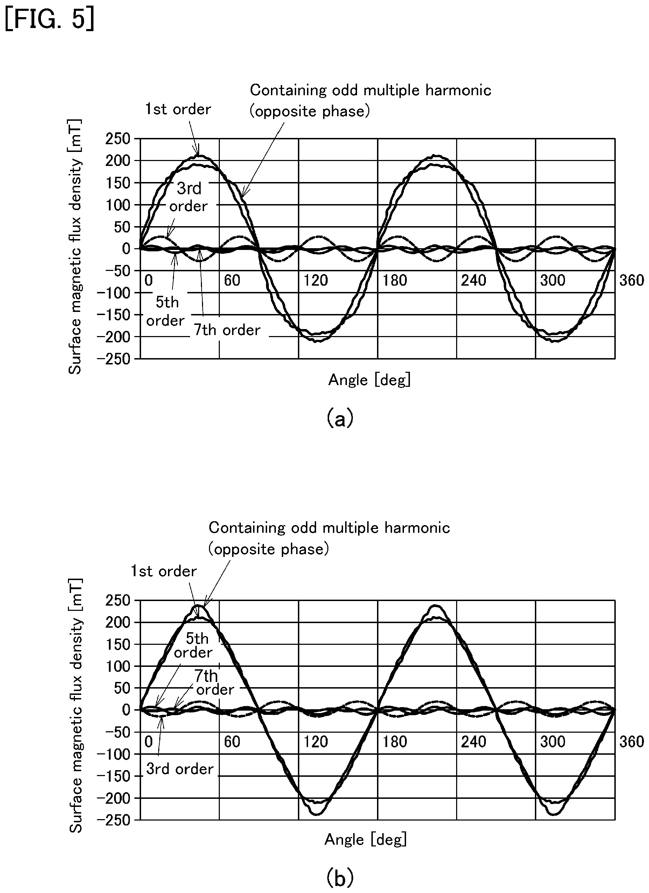

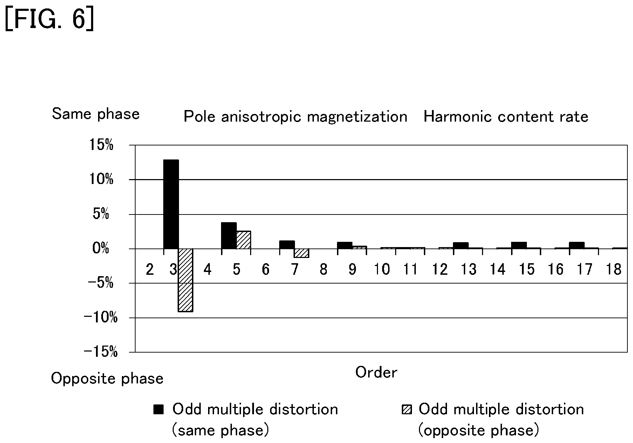

Further, in the brushless motor 11, the surface magnetic flux density distribution of the magnet 33 is a sine wave containing odd multiple harmonics (3rd-order, 5th-order, and 7th-order harmonics). FIG. 4 is an explanatory view of the surface magnetic flux density distribution of the magnet 33, which illustrates a sine wave (1st-order fundamental wave) free from distortion, a distorted sine wave containing an odd multiple harmonic having the same phase, and a distorted sine wave containing an odd multiple harmonic having an opposite phase. The harmonic having the same phase refers to those whose first waveform has the same phase as the 1st-order fundamental wave (FIG. 5(a)), and the harmonic having an opposite phase refers to those whose first waveform has the opposite phase to the 1st-order fundamental wave (FIG. 5(b)). As illustrated in FIG. 6, the content rate of the harmonics is high in the 3rd-order component and low in the 5th and 7th components. In this case, the 3rd component is actively superimposed by polar anisotropic magnetization, and 5th and 7th components are inevitably superimposed during magnetization.

One end portion of the rotary shaft 31 is freely rotatably supported by a bearing 34 press-fitted to the bottom portion of the motor case 14. The other end of the rotary shaft 31 is freely rotatably supported by bearing metals 35 and 36 fitted, respectively, to bearing holding parts 17c and 17d of the frame 17. A worm 37 is formed on the rotary shaft 31 at the end portion (right end side in FIG. 1) thereof. The worm 37 meshes with a worm wheel 38 disposed inside the frame 17. The worm 37 and worm wheel 38 constitute the speed reduction mechanism part 3. The worm wheel 38 is mounted to an output shaft 39. In the motor unit 1, rotation of the rotary shaft 31 of the brushless motor 11 is speed-reduced by the speed reduction mechanism part 3 and is transmitted to the output shaft 39, whereby the output shaft 39 is driven into rotation.

The rotary shaft 31 is fitted with a sensor magnet 41 for detecting rotation of the rotor 13. The sensor magnet 41 is magnetized so as to have a plurality of magnetic poles in the circumferential direction. A not-shown hall IC (magnetic detection element) is provided in the frame 17 so as to be opposed to the magnetic poles of the sensor magnet 41. The hall IC is disposed on a control board 42 of the control part 4. The control board 42 has, in addition to the hall IC, mounted thereon a control IC and elements such as a resistor and a capacitor. The control board 42 and brushless motor 11 are electrically connected to each other by an intermediate terminal (board connection terminal) 43. The intermediate terminal 43 is press-fitted into and fixed to a terminal holding part 17e of the frame 17.

The motor unit 1 is assembled as follows. The insulator 24 is mounted to the stator core 15, and a stator assembly in which the coil 16 is wound/wired is press-fitted into the frame 17. Thus, the coil terminal 26 (26U, 26V, 26W) of the brushless motor 11 and one end side of the intermediate terminal 43 of each phase are fitted to be electrically connected to each other. After connection of the terminals 26 and 43, the control board 42 is assembled to the frame 17 and then fixed by soldering to the other end side of the intermediate terminal 43. As a result, the control board 42 and brushless motor 11 are electrically connected, thereby allowing the control part 4 to control drive of the brushless motor 11.

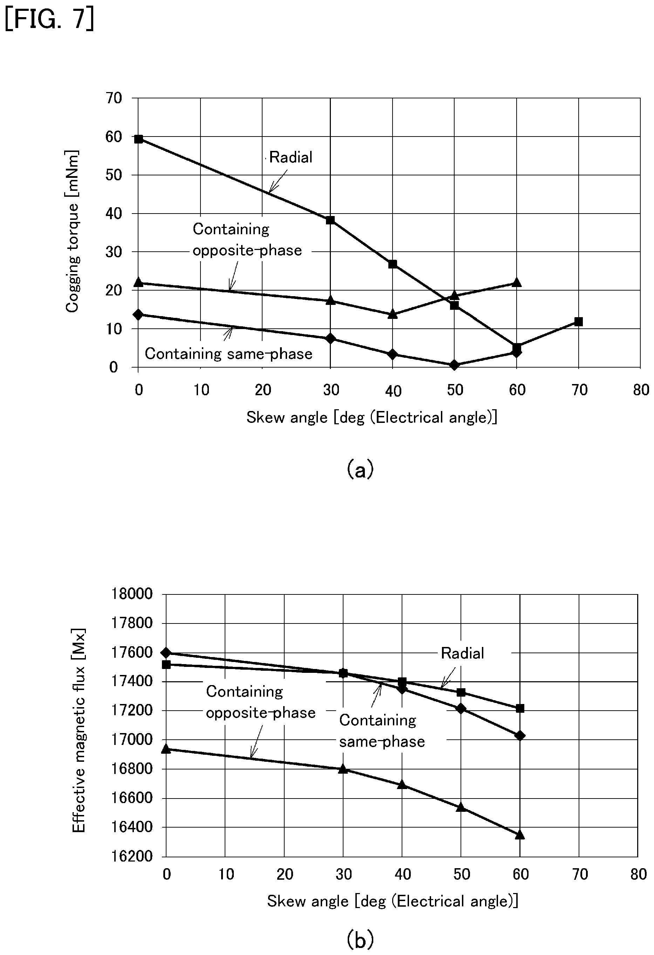

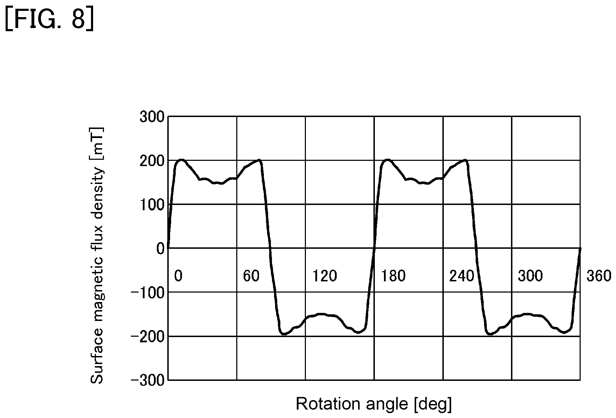

As described above, the brushless motor 11 according to the present invention is configured such that the magnet 33 has a skew structure and that the surface magnetic flux density distribution of the magnet 33 is a sine wave containing odd multiple harmonics. With this configuration, even when the center X of the teeth 22 or tip end Y thereof has a magnetic flux density of up to 1T or more under a non-energized state, cogging torque is reduced to small in the brushless motor 11. FIG. 7(a) is an explanatory view in which the relationship between the skew angle θ and cogging torque is compared between the cases of (1) radial magnetization, (2) distorted sine wave containing an odd multiple harmonic having the same phase, and (3) distorted sine wave containing an odd multiple harmonic having an opposite phase, and FIG. 7(b) is an explanatory view in which the relationship between the effective magnetic flux and cogging torque is compared between the above cases (1) to (3). In the radial magnetization, the magnet should not necessarily be magnetized in a wave form, but is uniformly magnetized in the radial direction, and the surface magnetic flux density assumes a trapezoidal shape as illustrated in FIG. 8.

As illustrated in FIG. 7(a), in the case of "radial magnetization", cogging torque is minimum when the skew angle θ is a theoretical value of 60° (electrical angle, the same applies hereinafter). On the other hand, in the case of a distorted sine wave containing odd multiple harmonics, cogging torque is minimum when θ = 50° (in the case of "containing same-phase") and when θ = 40° (in the case of "containing opposite-phase"). However, in the case of "containing opposite-phase", when θ is 50° or more, cogging torque becomes larger than in the case of "radial magnetization". Further, cogging torque in the case of "containing same-phase" is reduced as compared to that in the case of "containing opposite-phase". Further, in the case of "containing same-phase", cogging torque becomes substantially equal to or less than the minimum value of the cogging torque in the case of "radial magnetization" when the skew angle θ is set in a range of 30° to 60°. Therefore, in terms of cogging torque, the skew angle θ is set to 30° to 60° and, preferably, to 50° in the case of containing same-phase.

Next, referring to FIG. 7(b), effective magnetic flux is reduced as the skew angle θ is increased. That is, when the skew angle is large, a motor output is reduced, so that the motor size needs to be increased in order to obtain the same output. In other words, in terms of effective magnetic flux, the skew angle is preferably small. Further, in comparison among (1) to (3), effective magnetic flux is substantially equivalent in the cases of "radial magnetization" and "containing same-phase"; on the other hand, effective magnetic flux is smaller in the cases of "containing opposite-phase" than in the case of "radial magnetization". Thus, as is clear from FIG. 7(b), in terms of effective magnetic flux, the skew angle θ is preferably as small as possible in the case of containing same-phase.

When the results of FIGS. 7(a) and 7(b) are collectively taken into consideration, by making the surface magnetic flux distribution of the magnet 33 have a sine wave waveform containing odd multiple harmonics and by setting the skew angle θ to 30° to 60°, it is possible to ensure effective magnetic flux while reducing cogging torque. In this case, the skew angle is set to a value smaller than the theoretical optimum skew angle (60°). Thus, it is possible to reduce cogging torque while suppressing a reduction in magnetic flux due to an increase in the skew angle. In particular, it is preferable to make the surface magnetic flux distribution of the magnet 33 have a sine wave waveform containing an odd multiple harmonic having the same phase and to set the skew angle θ to 30° to 60°. Considering the balance between a reduction in cogging torque and the maintenance of effective magnetic flux, the skew angle θ is set to 40° to 60°, preferably, about 40° to 50°, and particularly preferably to around 50° (substantially 50°). This is because, as is clear from FIG. 4, a surface magnetic flux density waveform in the case of "containing same-phase" is closer to a trapezoidal wave than in the case of "containing opposite-phase" and has a smooth waveform change like a sine wave.

Thus, by setting the surface magnetic flux density waveform of the magnet 33 and skew angle θ as described above, it is possible to reduce cogging torque while suppressing a reduction in magnetic flux due to the skew even when the center part X of the teeth 22 or the tip end part Y thereof has a magnetic flux density of up to 1T or more under a non-energized state. Further, a fact that a sine wave contains the harmonic component is taken into consideration, so that even when the harmonic component is superimposed due to a variation during magnetization of the magnet 33, it is possible to prevent deterioration in cogging due to the influence of the superimposition.

The present invention is not limited to the above embodiment, and various modifications may be made without departing from the scope of the invention.

For example, in the above embodiment, the present invention is applied to an SPM (Surface Permanent Magnet) motor in which the magnet 33 is disposed at the outer periphery of the rotor 13; however, the present invention may be applied to an IPM (Interior Permanent Magnet) motor. Further, the rotor side magnet is not limited to the ringshaped magnet, but may be a segment magnet. Further, the skew structure may be a step-skew structure in which segment magnets are provided axially in a plurality of stages. In this case, the segment magnets are disposed so as to be peripherally shifted in units of stage by a predetermined angle.

**Industrial Applicability**

The present invention may be widely applicable to, for example, on-vehicle motors used as drive sources for power windows, sliding doors, rear gates, oil pumps and the like, various electric products such as home appliances, and industrial equipment, including robots and electric machines, in addition to the motor for the sunroof.

**Reference Signs List**

1: Motor unit
2: Motor part
3: Speed reduction mechanism
4: Control part
11: Brushless motor
12: Stator
13: Rotor
14: Motor case
15: Stator core
16: Coil
17: Frame
17a: Flange part
17b: Screw hole
17c: Bearing holding part
17d: Bearing holding part
17e: Terminal holding part
18: Cover
19: Screw
21: Yoke part
22: Teeth
23: Slot
24: Insulator
25: Winding
26: Coil terminal
26U, 26V, 26W; Coil terminal
31: Rotary shaft
32: Rotor core
33: Magnet
34: Bearing
35: Bearing metal
36: Bearing metal
37: Worm
38: Worm wheel
39: Output shaft
41: Sensor magnet
42: Control board
43: Intermediate terminal
L: Magnetic pole boundary line
X: Radial center part of teeth
Y: Tip end part of teeth
$\theta$: Skew angle

**Claims**

1.  A brushless motor **characterized by** comprising:

    a stator having a stator core having a plurality of teeth formed therein and a winding wound around the teeth and accommodated in slots formed between the adjacent teeth; and
a rotor disposed radially inside the stator and having a magnet, wherein
the magnet has a skew structure in which a magnetic pole switching position is shifted in a rotational direction of the motor along the axial direction thereof,
the maximum value of magnetic flux density at a radial center part of the teeth or a tip end part thereof under a non-load state is 1T or more, and
the surface magnetic flux density distribution of the magnet has a sine wave waveform that contains odd multiple harmonics.

2. The brushless motor according to claim 1, **characterized in that**
a skew angle $\theta$ of the magnet is represented by

$$\theta \text{ (electrical angle)} = P \times (360°/\text{least common multiple of } 2P \text{ and } T)$$

where 2P is the number of magnetic poles, and T is the number of slots, and
the skew angle $\theta$ is set in a range of electrical angle of 30° to 60°.

3. The brushless motor according to claim 2, **characterized in that**
the skew angle $\theta$ is set in a range of electrical angle of 40° to 50°.

4. The brushless motor according to any one of claims 1 to 3, **characterized in that**
the harmonics include one having the same phase as the surface magnetic flux density distribution of the magnet.

[FIG. 1]

[FIG. 2]

EP 3 681 015 A1

[FIG. 3]

[FIG. 4]

Containing odd multiple harmonic
(opposite phase)

Sine wave

Containing odd multiple
harmonic (same phase)

Angle [deg]

# [FIG. 5]

(a)

(b)

[FIG. 6]

Same phase     Pole anisotropic magnetization    Harmonic content rate

Opposite phase                    Order

■ Odd multiple distortion (same phase)     ☒ Odd multiple distortion (opposite phase)

[FIG. 7]

(a)

(b)

[FIG. 8]

<table>
<tr><td colspan="3">**INTERNATIONAL SEARCH REPORT**</td><td>International application No.<br>PCT/JP2018/030268</td></tr>
</table>

**A. CLASSIFICATION OF SUBJECT MATTER**
Int. Cl. H02K1/27(2006.01)i, H02K21/14(2006.01)i

According to International Patent Classification (IPC) or to both national classification and IPC

**B. FIELDS SEARCHED**

Minimum documentation searched (classification system followed by classification symbols)
Int. Cl. H02K1/27, H02K21/14

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2005-20930 A (MITSUBISHI ELECTRIC CORP.) 20 January 2005, fig. 1, 2, 8, paragraphs [0009]-[0012] & US 2005/0012419 A1, fig. 1, 2, 8, paragraphs [0022]-[0027] & DE 102004030831 A1 & CN 1578062 A | 1-4 |
| Y | JP 2002-136010 A (YASKAWA ELECTRIC CORP.) 10 May 2002, fig. 1, 2, paragraph [0012] (Family: none) | 1-4 |

☐ Further documents are listed in the continuation of Box C.      ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>16.10.2018 | Date of mailing of the international search report<br>23.10.2018 |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005020930 A
- JP 2016100979 A
- JP 2008172983 A